# EUROPÄISCHE PATENTANMELDUNG

(11) **EP 1 309 165 A1**
(43) Veröffentlichungstag der Anmeldung: **07.05.2003**
(21) Anmeldenummer: 01125073.5
(22) Anmeldetag: 22.10.2001
(51) Int. Cl.: H04N 1/00, H04L 12/28

(54) **Verfahren zum Umschalten zwischen einer Sprachübermittlung und einer Faxübermittlung, Vorrichtung und Computerprogrammprodukt**

(71) Anmelder: SIEMENS AKTIENGESELLSCHAFT, 80333 München (DE)
(72) Erfinder: Baumann, Thomas, 82110 Germering (DE); Groetzner, Karin, 85716 Unterschleissheim (DE)

(57) **Zusammenfassung**

Zum Zurückschalten einer Faxübermittlung gemäß T.38 auf eine Sprachübermittlung über ein IP-Netz wird vorgeschlagen, die im Media Gateway Controller (11) auf der B-Seite gespeicherten Übermittlungsdaten über ein Signalisierungsnetz (12) an den Media Gateway Controller (10) auf der A-Seite zu übertragen und dadurch ein gemeinsames Rückschalten der Codecs in dem Media Gateway (3) auf der A-Seite und dem Media Gateway (4) auf der B-Seite zu bewerkstelligen.

## Beschreibung

Die Erfindung betrifft Verfahren zum Umschalten zwischen einer über ein Paketnetz eingerichteten ersten Übermittlung und einer über ein Paketnetz eingerichteten zweiten Übermittlung. Die Erfindung betrifft ferner eine Vorrichtung und ein Computerprogrammprodukt, die zur Ausführung des Verfahrens eingerichtet sind.

Ein derartige erste oder zweite Übermittlung kann beispielsweise eine Sprach- oder Faxübermittlung sein.

Sprach- und Faxübermittlungen erfolgen zur Zeit über zwei Arten von Kommunikationsnetzen: das klassische, leitungsorientierte Telefonnetz, das hauptsächlich der Übermittlung von Sprache dient, und das paketorientierte Datennetz, das vor allem zur Übermittlung von Daten eingerichtet ist. Das leitungsorientierte Telefonnetz wird nachfolgend kurz als Leitungsnetz und das paketorientierte Datennetz als Paketnetz bezeichnet.

In den klassischen Leitungsnetzen werden nicht nur Informationen zwischen den Verbindungsteilnehmern ausgetauscht. Vielmehr werden auch Informationen ausgetauscht, die die Steuerung des Leitungsnetzes selbst betreffen. Diese Informationen gelangen nicht notwendig zu den Verbindungsteilnehmern an den Endgeräten, sondern werden von den Netzknoten oder Endgeräten ausgewertet. Der Austausch dieser Informationen wird als Signalisierung bezeichnet. Da für die Signalisierung in den Leitungsnetzen im allgemeinen definierte Kommunikationswege reserviert sind, spricht man auch von Signalisierungsnetzen. Grundsätzlich kann die Signalisierung für ein Leitungsnetz auch über ein Paketnetz erfolgen.

Daneben besteht die Tendenz, zur Übermittlung von Informationen, die bislang über das klassische Leitungsnetz geführt wurden, auch Paketnetze zu verwenden. Da dann die entsprechenden Informationen nicht nur über das klassische Leitungsnetz, sondern auch über Paketnetze geführt werden, spricht man in diesem Zusammenhang von heterogenen Netzen.

Bekanntermaßen können komprimierende Codecs für Faxübermittlungen über ein Paketnetz nicht ohne weiteres verwendet werden, da bei einer Verwendung komprimierender Codecs die fehlerfreie Übertragung der Faxtöne nicht gewährleistet ist. Es besteht zwar grundsätzlich die Möglichkeit, einen nicht-komprimierenden Codec für die Übertragung von Faxübermittlungen über Paketnetze zu verwenden, wobei darauf zu achten ist, daß Pausen zwischen den Signaltönen vom Codec nicht aus dem Datenstrom entfernt werden. So ist es zum Beispiel möglich, mit Hilfe des nicht-komprimierenden Codecs nach G.711 eine Faxübermittlung über ein Paketnetz, insbesondere ein Internet-Protokoll-Netz, herzustellen. Allerdings benötigt eine derartige Faxübermittlung eine Bandbreite von 64 kb/sec, obwohl die Faxübermittlung selbst lediglich eine Datenrate von 14 kb/sec aufweist. Daher wurde ein besonderes Standard, nämlich T.38, für Faxübermittlungen über ein Paketnetz auf der Basis des Internet-Protokolls geschaffen.

Gelegentlich besteht die Notwendigkeit, nach dem Ende einer Faxübermittlung in eine der Faxübermittlung vorhergehende Sprachübermittlung zurückzuschalten. Dies war bislang bei Faxübermittlungen über ein Paketnetz nicht möglich. Die Teilnehmer mußten die Faxübermittlung beenden und die gewünschte Sprachübermittlung neu aufbauen.

Ausgehend von diesem Stand der Technik liegt der Erfindung die Aufgabe zugrunde, ein Verfahren, eine Vorrichtung und ein Computerprogrammprodukt zum Umschalten zwischen einer ersten und einer zweiten Übermittlung anzugeben, die einen mehrfachen Wechsel zwischen der ersten und der zweiten Übermittlung erlauben.

Diese Aufgabe wird erfindungsgemäß durch ein Verfahren mit den folgenden Verfahrensschritten gelöst:
- Einrichten einer ersten Übermittlung zwischen einer Leitungsnetz und Paketnetz verbindenden ersten Übermittlungstelle und einer Paketnetz und Leitungsnetz verbindenden zweiten Übermittlungstelle; und
- Umschalten von der ersten Übermittlung zu einer zwischen der ersten Übermittlungsstelle und der zweiten Übermittlungsstelle eingerichteten zweiten Übermittlung und Speichern der Übermittlungsdaten der ersten Übermittlung während der zweiten Übermittlung in wenigstens einer der beiden Übermittlungsstellen.

Diese Aufgabe wird ferner durch eine zur Ausführung des Verfahrens eingerichtete Vorrichtung und ein zur Ausführung des Verfahrens eingerichtetes Computerprogrammprodukt gelöst.

Durch das Verfahren gemäß der Erfindung ist sichergestellt, daß die Übermittlungsstellen nach dem Ende der zweiten Verbindung über die Übermittlungsdaten der ersten Übermittlung verfügen können. Die Übermittlungsstellen sind daher in der Lage, unmittelbar nach dem Ende der zweiten Übermittlung zu der ersten Übermittlung zurückzuschalten. Das Verfahren gemäß der Erfindung erlaubt daher einen unterbrechungsfreien mehrfachen Übergang von einer ersten zu einer zweiten Übermittlung, wenn beim Umschalten jeweils die Daten der vorhergehenden Übermittlung gespeichert werden.

Bei einer bevorzugten Ausführungsform der Erfindung werden lediglich in einer der beiden Übermittlungsstellen die Übermittlungsdaten gespeichert und beim Zurückschalten auf die erste Übermittlung an die jeweils andere Übermittlungstelle zurückübertragen.

Durch die Speicherung in nur einer der beiden Übermittlungsstellen läßt sich Speicherplatz in den Übermittlungsstellen einsparen. Dies ist ein nicht unwesentlicher Vorteil, da die gespeicherten Übermittlungsdaten ohnehin nur bei einer geringen Anzahl von Übermittlungen benötigt werden, nämlich dann wenn tatsächlich zurückgeschaltet wird. Die dann notwendige Übermittlung der Übermittlungsdaten der ersten Übermittlung läßt sich auf einfache Weise bewerkstelligen, da in jedem Fall Daten wie die neu vergebenen IP-Adressen oder neu vergebenen Nummern der verwendeten RTP-Ports zwischen den Übermittlungsstellen ausgetauscht werden müssen.

Weitere Einzelheiten der Erfindung sind Gegenstand der abhängigen Ansprüche.

Nachfolgend wird die Erfindung im einzelnen anhand der beigefügten Zeichnung erläutert. Es zeigen:
- Figur 1: ein Blockdiagramm, das einen ersten Teil des Ablaufs eines Verfahrens zum Zurückschalten einer Faxübermittlung in eine Sprachübermittlung zeigt;
- Figur 2: ein Blockdiagramm, das einen zweiten Teil des Ablaufs des Verfahrens aus Figur 1 zeigt;
- Figur 3: eine Darstellung der Datenstruktur eines ersten Elements einer Nachricht, in dem der zweite Gateway Controller dem ersten Gateway Controller das Ende der Faxübermittlung mitteilt;
- Figur 4: eine Darstellung der Datenstruktur eines weiteren Elements der Nachricht, in dem der zweite Media Gateway Controller dem ersten Media Gateway Controller die Nummer eines RTP-Ports mitteilt;
- Figur 5: eine Darstellung der Datenstruktur eines dritten Elements der Nachricht, in dem der zweite Media Gateway Controller dem ersten Media Gateway Controller eine IP-Adresse mitteilt;
- Figur 6: eine Darstellung eines vierten Elements der Nachricht vom zweiten Media Gateway Controller an den ersten Media Gateway Controller, in dem die vom zweiten Media Gateway Controller verwendeten Codecs mitgeteilt werden;
- Figur 7: eine Darstellung der Datenstruktur eines ersten Elements einer Nachricht vom ersten Media Gateway Controller an den zweiten Media Gateway Controller, in der das erfolgreiche Umschalten von Seiten des ersten Media Gateway Controllers gemeldet wird;
- Figur 8: eine Darstellung der Datenstruktur eines weiteren Elements der Nachricht vom ersten Media Gateway Controller an den zweiten Media Gateway Controller, in dem die vom ersten Media Gateway verwendete Portnummer mitgeteilt wird.
- Figur 9: eine Darstellung der Datenstruktur eines dritten Elements einer Nachricht vom ersten Media Gateway Controller an den zweiten Media Gateway Controller, in der die vom ersten Media Gateway verwendete IP-Adresse mitgeteilt wird;
- Figur 10 a bis d: ein Blockdiagramme, in denen der erste Teil einer Ausführungsform des Verfahrens unter Verwendung des Megaco-Protokolls dargestellt ist; und
- Figur 11: ein Blockdiagramm mit dem zweiten Teil des Verfahrens aus Figur 10.

Die nachfolgend im einzelnen beschriebenen Ausführungsbeispiele betreffen das Umschalten von einer Sprachübermittlung in eine Faxübermittlung und das erneute Zurückschalten in die Sprachübermittlung, wobei insbesondere das Zurückschalten in die Faxübermittlung im Detail dargestellt ist. Es ist dem Fachmann klar, daß die hier vorgestellten Überlegungen auch für Umschaltvorgänge von einer Faxverbindung zu einer Sprachverbindung und zurück zu einer Faxverbindung gelten. Außerdem sind auch mehrfache Umschaltvorgänge möglich.

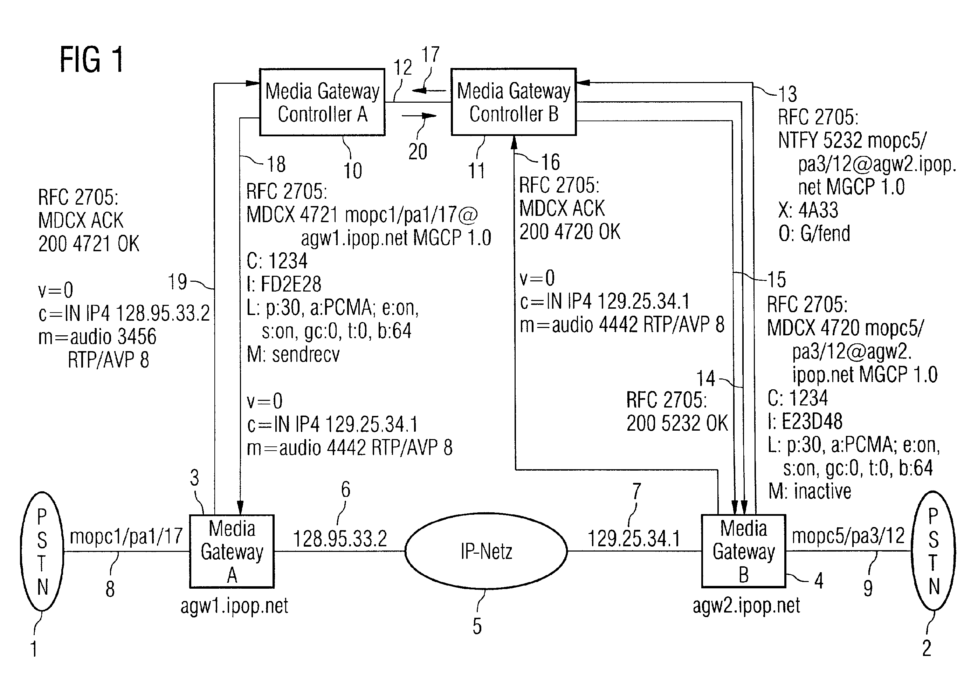

In Figur 1 ist jeweils ein erstes Leitungsnetz 1 und ein zweites Leitungsnetz 2 über ein Media Gateway 3 auf der A-Seite und ein Media Gateway 4 auf der B-Seite mit einem IP(Internet Protocol)-Netz 5 verbunden. Das Media Gateway 3 auf der A-Seite verfügt im IP-Netz über eine IP-Netzadresse GwA, während das Media Gateway 4 auf der B-Seite über eine IP-Netzadresse GwB verfügt. Die Media Gateways 3 und 4 vergeben für die Sprachübermittlung jeweils IP-Adressen 6 und 7. An das Leitungsnetz 1 und 2 sind die Media Gateways 3 und 4 jeweils über PCM-Leitungen 8 und 9 angeschlossen, die über SS7-Signalisierung adressiert werden. Die Media Gateways 3 und 4 wirken als Konverter zwischen den Leitungsnetzen 1 und 2 und dem IP-Netz 5, da sie die Datenformate der Leitungsnetze 1 und 2 in das Datenformat des IP-Netzes 5 umsetzen und umgekehrt. Nachfolgend werden die Media Gateways 3 und 4 der Einfachheit halber mit MG 3 und 4 abgekürzt.

Den Media Gateways 3 und 4 sind jeweils Media Gateway Controller 10 und 11 zugeordnet. Die Media Gateway Controller 10 und 11 haben daher die Funktion von Konvertersteuerungen. Die Media Gateway Controller kommunizieren über ein Signalisierungsnetz 12. Bei dem Signalisierungsnetz 12 kann es sich um ein sogenanntes SS7-Signalisierungsnetz handeln. Die Media Gateway Controller 10 und 11 werden nachfolgend mit MGC 10 und 11 abgekürzt.

Das MG 3 bildet zusammen mit dem MGC 10 eine das IP-Netz 5 mit dem Leitungsnetz 1 verbindende Übermittlungsstelle, die auf der nachfolgend mit A-Seite bezeichneten Seite der Sprachübermittlung angeordnet ist.

Gleichermaßen bildet das MG 4 zusammen mit dem MGC 11 eine weitere das IP-Netz 5 mit dem Leitungsnetz 2 verbindende Übermittlungsstelle, die auf der nachfolgend als B-Seite bezeichneten Seite der Sprachübermittlung angeordnet ist.

Das Verfahren zum Zurückschalten der Faxübermittlung setzt voraus, daß zwischen dem MG 3 auf der A-Seite und dem MG 4 auf der B-Seite zunächst eine Sprachübermittlung über das IP-Netz 5 bestand, die dann in eine Faxübermittlung gemäß T.38 über das IP-Netz 5 umgeschaltet wurde.

Die Umschaltvorgänge zwischen Sprachübermittlung und Datenübermittlung werden von sogenannten Verbindungsagenten ("Connection Agents") gesteuert. Diese Verbindungsagenten sind im allgemeinen in der Form von Software in den MGCs 10 und 11 implementiert. Diese Verbindungsagenten überwachen den Übermittlungsaufbau zwischen den MGs 3 und 4. Vor allem steuern die Verbindungsagenten auch den das Umschalten auf die Faxübermittlung und das Zurückschalten auf die Sprachübermittlung. Der Verbindungsagent sorgt auch dafür, daß die entsprechenden MGCP-Befehle an das jeweilige MG 3 oder 3 geschickt werden. Außerdem kommuniziert der Verbindungsagent über das Signalisierungsnetz (BICC-Protokoll; Q.763/Q.765.5) mit dem Verbindungsagent der anderen Seite.

Um die Faxübermittlung wieder auf die Sprachübermittlung zurückzuschalten, müssen den Verbindungsagenten auf der A-Seite und der B-Seite gemäß MGCP-Standard RFC2705,"Local Connection Options", folgende Daten der ursprünglichen Sprachübermittlung bekannt sein:
- Codec für die Sprachverbindung (z.B. G.711, G.723, G.729..);
- Bandbreite der Sprachverbindung (z.B. 64 kbit/s für Codec G.711, 5.3 oder 6.3 kbit/s für Codec G.723);
- "Packetization Period" (z.B. 30 ms);
- "Silence Suppression" (ON oder OFF);
- "Echo Cancellation" (ON oder OFF);
- "Type of Service" (z.B. "03"; wird in den IP-Header der Sprach RTP-Pakete eingefügt, bestimmt die Priorität der Pakete im IP-Netz); und
- "Gaincontrol" (z.B. 2 dB)

Damit diese Übermittlungsdaten den Verbindungsagenten in den MGCs 10 und 11 zur Verfügung stehen, sind vier Grundszenarien denkbar:
- sowohl in dem MGC 10 auf der A-Seite als auch in dem MGC 11 auf der B-Seite werden die Übermittlungsdaten der vorhergehenden Übermittlung gespeichert;
- die Übermittlungsdaten werden nur von einem der beiden MGCs 10 und 11 gespeichert und nach dem Ende der Faxübermittlung dem jeweils anderen MGC mitgeteilt;
- die den Übermittlungsdaten entsprechenden Parameter werden im MGC 10 auf der A-Seite und im MGC auf der B-Seite teilweise fest eingestellt und nur die variablen Parameter werden auf beiden Seiten gespeichert; und
- die den Übermittlungsdaten entsprechenden Parameter werden im MGC 10 auf der A-Seite und im MGC auf der B-Seite teilweise fest eingestellt und nur die variablen Parameter werden in einer der beiden MGCs 10 oder 11 gespeichert und am Ende der Faxübermittlung dem jeweils anderen MGC mitgeteilt.

Selbstverständlich sind auch Mischformen möglich. Es ist zum Beispiel auch denkbar, einen Teil der Übermittlungsdaten auf beiden Seiten zu speichern und einen anderen Teil nur einseitig zu speichern.

Im folgenden wird davon ausgegangen, daß bis auf die verwendeten Codecs, die IP-Adressen 6 und 7 sowie die RTP-Nummern sämtliche Parameter fest voreingestellt sind. Dies ist insbesondere bei einem Telephonnetz einer nationalen Telefongesellschaft eine gangbare Möglichkeit.

Außerdem wird davon ausgegangen, daß die verwendeten Codecs in dem zweiten MGC 11 beim Umschalten von der Sprachübermittlung zu der Faxübermittlung zwischengespeichert worden sind. Die in der ursprünglichen Sprachübermittlung verwendeten Codecs müssen dann zwar beim Zurückschalten auf die Faxübermittlung dem MGC 10 mitgeteilt werden, aber dies bedingt nur einen geringen Mehraufwand, da die für die neue Sprachübermittlung vergebenen IP-Adressen 6 und 7 sowie die RTP-Nummern ohnehin dem MGC 10 auf der A-Seite mitgeteilt werden müssen.

Diese Vorgehensweise bringt den Vorteil mit sich, daß Speicherplatz gespart werden kann, da nur die notwendigste Information abgespeichert wird.

Der Umschaltvorgang von einer Sprachverbindung zu einer Faxverbindung läuft also so ab, daß im MGC 11 auf der B-Seite der ursprünglich verwendete Codec für die Sprachübermittlung zwischen dem MG 3 auf der A-Seite und dem MG 4 auf der B-Seite gespeichert wird.

Der Vorgang des Zurückschaltens, wird nachfolgend im einzelnen beschriebenen.

Bei dem in Figur 1 dargestellten Verfahren zum Zurückschalten auf eine Sprachübermittlung richtet das MG 4 auf der B-Seite nach dem Ende der Faxübermittlung eine Nachricht 13 gemäß RFC2705(MGCP) in der Form einer NTFY(Notify)-Nachricht an das MGC 11. In der Nachricht 13 zeigt ein neuer bislang nichtstandardisierter Parameter "fend" das Ende der Faxübermittlung dem MGC 11 auf der B-Seite an. Das MGC 11 auf der B-Seite quittiert die Nachricht 13 mit einer Antwort 14 gemäß RFC2705 und sendet eine Aufforderung 15 an das MG 4 auf der B-Seite, die Faxübermittlung in eine Sprachübermittlung umzuschalten. Dies geschieht in der Form eines MDCX (Modify Connection)-Befehls nach RFC2705(MGCP). In der Aufforderung 15 wird dem MG 4 auf der B-Seite der für die ursprüngliche Sprachübermittlung über das IP-Netz 5 verwendete Codec mitgeteilt. So bedeutet im Parameter L der Aufforderung 15 die Angabe "PCMA", daß ein Codec nach G.711 für die ursprüngliche Sprachübermittlung über das IP-Netz 5 verwendet worden ist.

Die Aufforderung 15 wird vom MG 4 auf der B-Seite nach der Ausführung mit einer Bestätigung 16 nach RFC2705 erwidert, in der dem MGC 11 auf der B-Seite vom MG 4 auf der B-Seite die vom MG 4 auf der B-Seite vergebene IP-Adresse 7 sowie mit der Angabe "442" im Parameter m die Nummer des verwendeten RTP-Ports mitgeteilt wird.

Der MGC 11 auf der B-Seite sendet daraufhin eine Mitteilung 17 über das Signalisierungsnetz 12 an den MGC 10 auf der A-Seite. Die Datenstruktur der Mitteilung 14 wird im folgenden noch näher erläutert werden. Es sei jedoch bereits jetzt erwähnt, daß in der Mitteilung 14 Informationen über das Ende der Faxübermittlung, die vom MG 4 vergebene IP-Adresse 7, die Nummer des RTP-Ports und über den verwendeten Codec enthalten sind.

Nach dem Erhalt der Mitteilung 17 setzt der MGC 10 auf der A-Seite eine Aufforderung in der Form eines MDCX (Modify Connection)-Befehls nach RFC2705(MGCP) an das MG 3 auf der A-Seite ab. Die Aufforderung 18 enthält dabei Angaben nach dem SDP (Session Description Protocol) gemäß RFC2327. In diesem Teil der Aufforderung 18 werden dem MG 3 auf der A-Seite die vom MG 4 auf der B-Seite vergebene IP-Adresse 7 sowie der verwendete RTP-Port mitgeteilt. Außerdem wird im Parameter L mit der Angabe "PCMA" mitgeteilt, daß das MG 4 auf der B-Seite einen Codec nach G.711 verwendet.

Das MG 3 auf der A-Seite richtet daraufhin eine Verbindung mit den angegebenen Parametern ein und reagiert mit einer Bestätigung 19 in der Form einer MDCX ACK (Modify Connection Acknowledgment)-Nachricht nach RFC2705(MGCP), wobei die Bestätigung 19 einen Abschnitt gemäß dem SDP nach RFC2327 enthält, in dem die vom MG 3 auf der A-Seite vergebene IP-Adresse 6 sowie der verwendete RTP-Port und der verwendete Codec mitgeteilt werden. In diesem Fall ist die Information über den Codec im Parameter m in der Ziffer "8" enthalten, die anzeigt, daß das MG 3 einen nicht komprimierenden Codec nach G.711 verwendet.

Der MGC 10 auf der A-Seite sendet daraufhin eine Mitteilung 20 an den MGC 11 auf der B-Seite, in der die vom MG 3 auf der A-Seite vergebene IP-Adresse 6 und der verwendete RTP-Port dem MGC 11 auf der B-Seite mitgeteilt werden. Die Datenstruktur der Nachricht 20 wird im folgenden noch im einzelnen beschrieben werden.

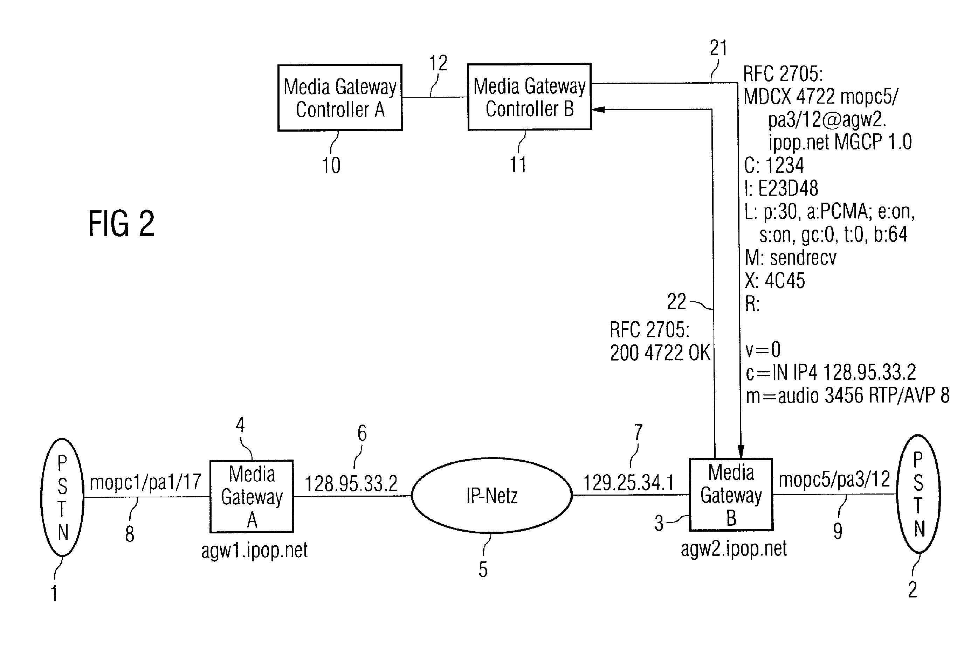

Wie in Figur 2 dargestellt, reagiert der MGC 11 auf der B-Seite auf die Nachricht 20, indem er eine Aufforderung 21 in der Form eines MDCX (Modify Connection)-Befehls nach RFC2705 an den MG 3 auf der B-Seite sendet. In der Aufforderung 21 werden dem MG 4 auf der B-Seite die vom MG 3 auf der A-Seite vergebene IP-Adresse 6, sowie die verwendete RTP-Portnummer und der verwendete Codec mitgeteilt. Diese Information ist gemäß SDP nach RFC 2327 in den Parametern c und m enthalten. Die Information über den verwendeten Codec ist zusätzlich im Parameter L in der Angabe "PCMA" enthalten. Das MG 3 auf der B-Seite richtet daraufhin die Sprachübermittlung mit den mitgeteilten Übermittlungsdaten ein und sendet eine Bestätigung 22 an den MGC 11 auf der B-Seite.

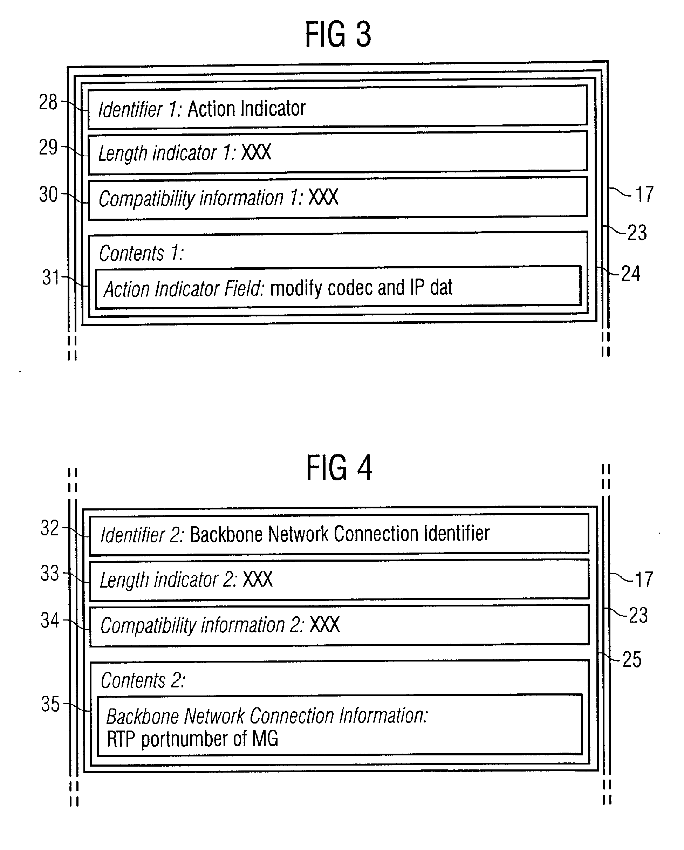

In den Figuren 3 bis 6 ist die Datenstruktur von Informationselementen dargestellt, die in der Mitteilung 17 enthalten sind. Die Mitteilung 17 erfolgt im Rahmen des BICC(Bearer Independent Call Control)-Protokolls nach der Norm Q.765/Q.763. Insbesondere wird die Information über das MG 4 auf der B-Seite mit Hilfe des APP (Application Transport Parameter) übertragen, der im Rahmen der Empfehlung Q.763 der ITU-T spezifiziert ist. In dem Dokument ITU-T Q. 763/AMD.1 (03/2001), Prepublished Version, findet sich eine genaue Beschreibung dieses Parameters 23. Der Parameter 23 enthält neben einem in den Figuren 3 bis 6 nicht dargestellten Datenkopf eine Liste von Informationselementen 24 bis 27, die in den Figuren 3 bis 6 im einzelnen dargestellt sind und deren Struktur durch Q.765.5 vorgegeben ist.

Bei dem in Figur 3 dargestellten Informationselement 24 kennzeichnet eine erste Identifikationsmarke 28 die Funktion Inhalt des Informationselements 24. Das Informationselement 24 enthält weiter eine Längeninformation 29 und eine Kompatibilitätsinformation 30, denen ein Aktionsindikatorfeld 31 folgt. Das Aktionsindikatorfeld 31 dient dazu, dem MGC 10 auf der A-Seite das Ende der Faxübermittlung anzuzeigen und die Einleitung eines Umschaltvorgangs anzufordern.

Das in Figur 4 dargestellte Informationselement 25 enthält wie das in Figur 3 dargestellte Informationselement eine Identifikationsmarke 32, die die Funktion des Informationselements 25 kennzeichnet. Auf die Identifikationsmarke 32 folgt wiederum eine Längeninformation 33 und eine Kompatibilitätsinformation 34, der ein Informationsfeld 35 folgt, das die vom MG 4 auf der B-Seite verwendete RTP-Portnummer enthält.

Das Informationselement 26 beginnt ebenfalls mit einer Identifikationsmarke 36, die die Funktion des Informationselements 26 kennzeichnet. Daraufhin folgen eine Längeninformation 37 und eine Kompatibilitätsinformation 38, denen sich ein Informationsfeld mit der IP-Adresse 7 anschließt, die das MG 4 auf der B-Seite für die Sprachübermittlung vergeben hat.

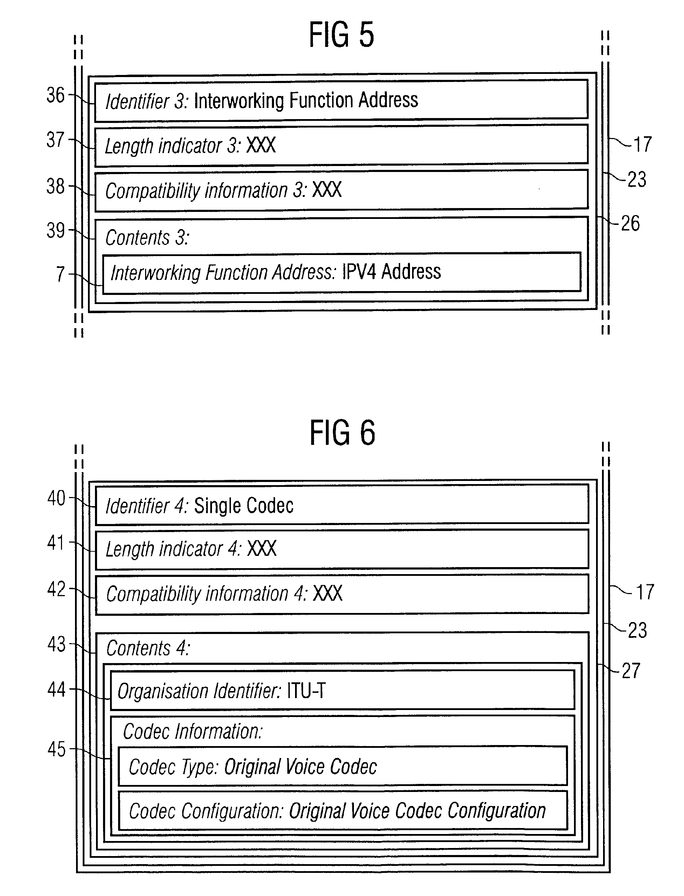

Das Informationselement 27 aus Figur 6 besteht ebenfalls aus einer ersten Identifikationsmarke 36, hinter der eine Längeninformation 40 und eine Kompatibilitätsinformation 41 angeordnet sind. Das nachfolgende Informationsfeld 43 ist mehrfach gegliedert und enthält eine Information 44 mit Angaben zur standardisierenden Organisation, in diesem Fall ITU-T, und eine Codec-Beschreibung, die den Typ des vom MG 4 auf der B-Seite verwendeten Codecs und dessen Konfiguration enthält.

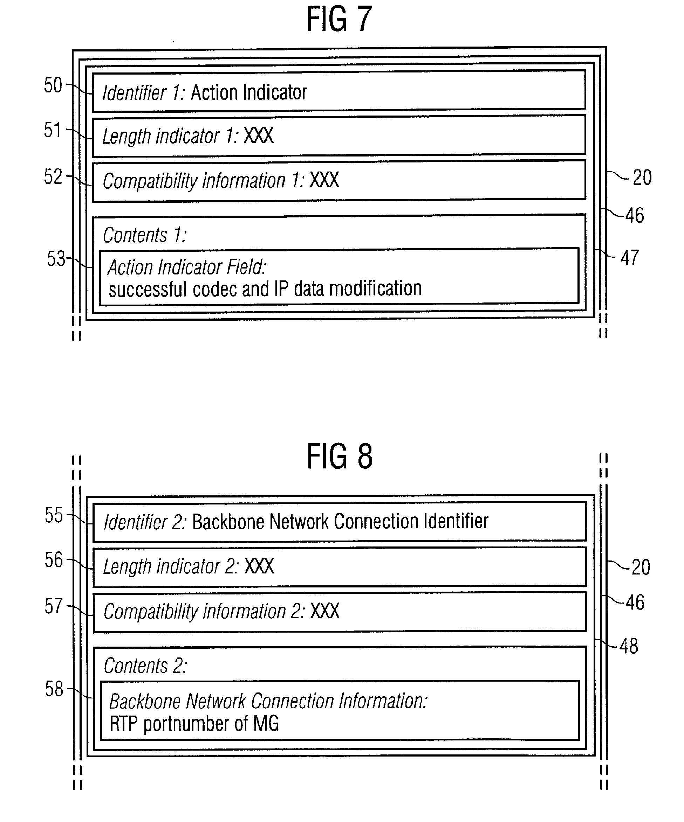

In den Figuren 7 bis 9 ist die Datenstruktur der Mitteilung 20 dargestellt.

Die Mitteilung 20 enthält die relevante Information ebenfalls in einem in Q.763 spezifizierten Parameter 46 mit der Bezeichnung APP. Dieser Parameter 46 enthält neben einem in den Figuren 7 bis 9 nicht dargestellten Datenkopf eine Liste von Informationselementen 47 bis 49, über die die Übermittlungsdaten des MG 3 auf der A-Seite dem MGC 11 auf der B-Seite mitgeteilt werden. Das Informationselement 47 enthält eine Identifikationsmarke 50, dem eine Längeninformation 51 und eine Kompatibilitätsinformation 52 folgt. Daran schließt sich ein Informationsfeld 53 an, durch das dem MGC 11 auf der B-Seite das erfolgreiche Zurückschalten des MG 3 auf der A-Seite gemeldet wird.

Auch das in Figur 8 dargestellte Informationselement 46 beginnt mit einer Identifikationsmarke 55 mit darauffolgender Längeninformation 56 und Kompatibilitätsinformation 57. In einem Informationselement 58 wird schließlich die Nummer des vom MG 3 auf der A-Seite verwendeten RTP-Ports dem MGC 11 auf der B-Seite mitgeteilt.

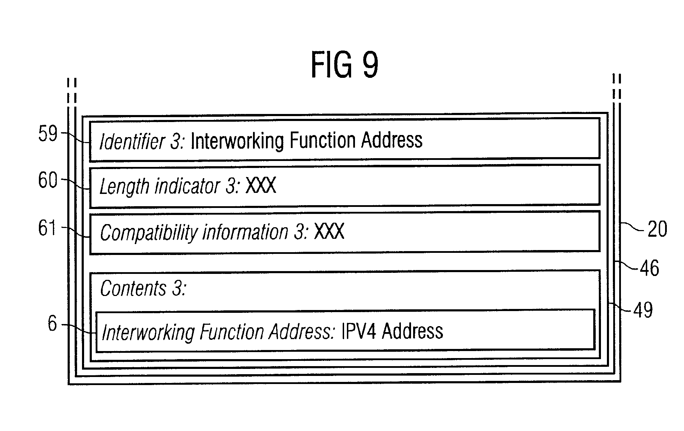

Das in Figur 9 dargestellte Informationselement 46 enthält schließlich neben einer Identifikationsmarke 59, der Längeninformation 60 und der Kompatibilitätsinformation 61 ein Informationsfeld 62 mit der vom MG 3 auf der A-Seite vergebene IP-Adresse 6.

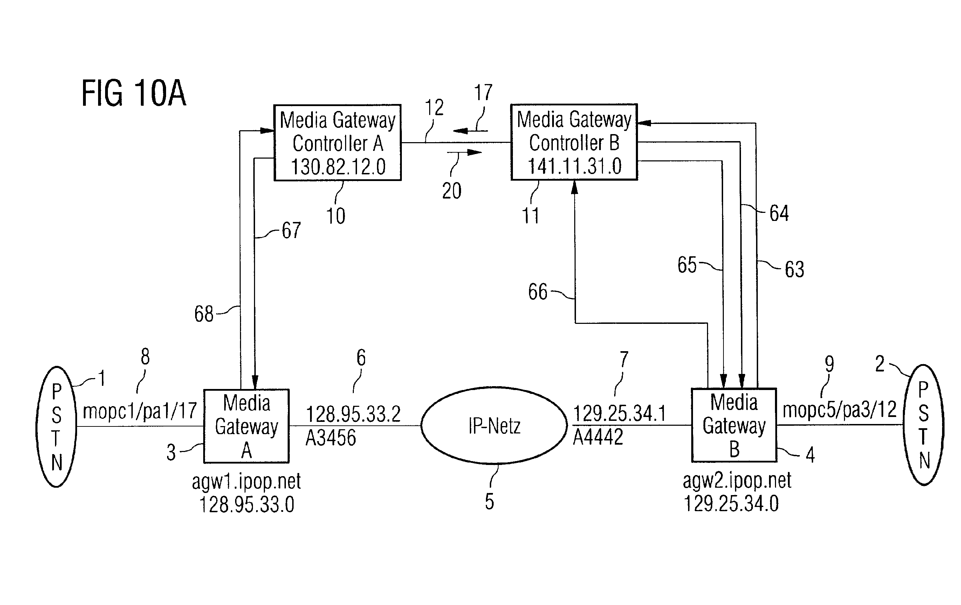

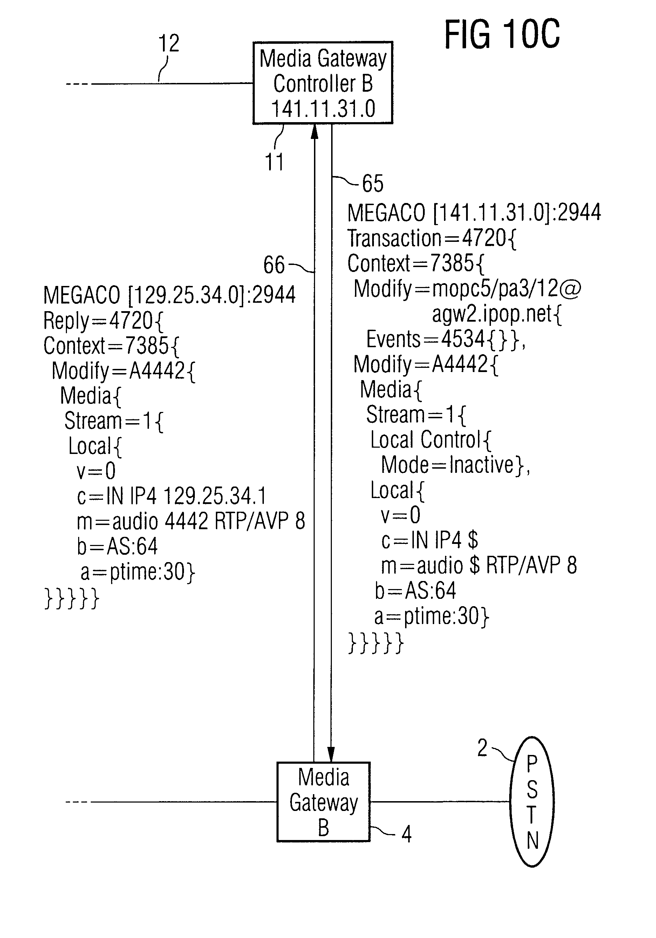

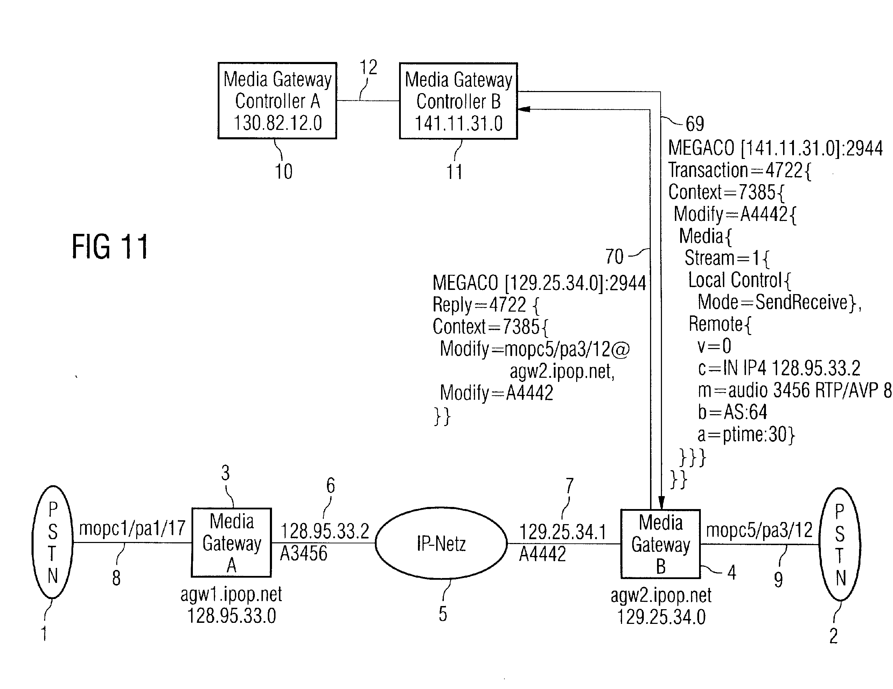

In den Figuren 10a bis d und 11 ist ein weiteres Ausführungsbeispiel des Verfahrens dargestellt, bei dem die Kommunikation zwischen den Media Gateways 3 und 4 und den Media Gateway Controllern 10 und 11 mit Hilfe des von der IETF in RFC2885 spezifizierten Megaco-Protokolls abläuft. Eine gleichlautende Spezifikation der ITU-T existiert unter der Bezeichnung H.248.Die Kommunikation zwischen den Media Gateways 3 und 4 und den Media Gateway Controllern 10 und 11 erfolgt entsprechend mit den anhand der Figuren 1 und 2 bereits beschriebenen Verfahrensschritten.

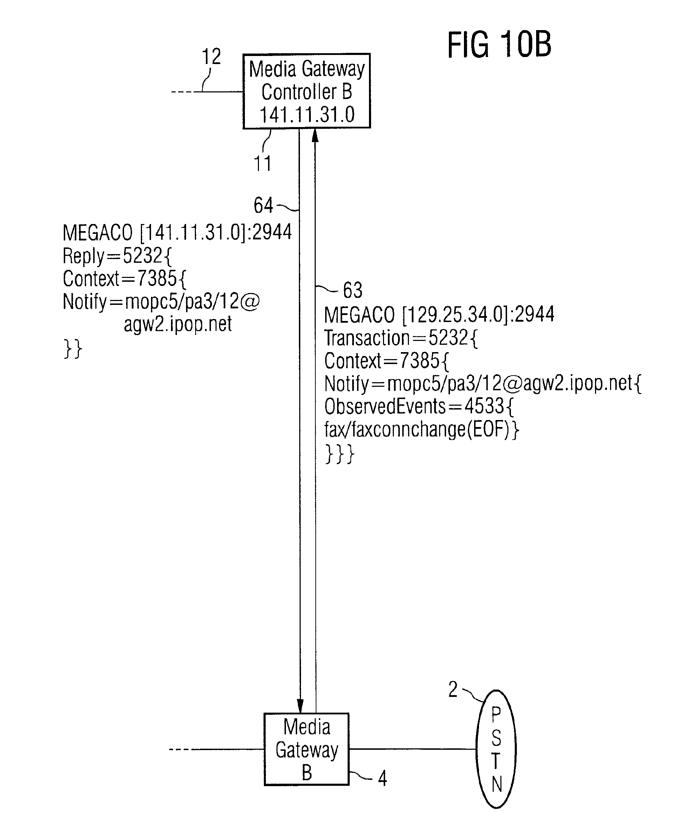

Die Figuren 10a bis 10d betreffen einer ersten Teil des Verfahrens. Insbesondere enthält Figur 10a einen Überblick über die in den Figuren 10b bis 10d im einzelnen dargestellten Verfahrensschritte.

Insbesondere meldet das MG 4 auf der B-Seite dem MGC 11 auf der B-Seite in einer in der Figur 10b dargestellten Nachricht 63 das Ende der Faxübermittlung, wobei bereits das im Megaco-Protokoll verwendete Ereignis "Faxconnchange" mit dem Parameter "EOF" verwendet wird.

Der MGC 11 auf der B-Seite antwortet daraufhin gemäß Figur 10c mit einer Bestätigung 64 und einer Aufforderung 65, die Faxübermittlung gemäß T.38 in eine Sprachübermittlung über das IP-Netz 5 zurückzuschalten. Entsprechend enthält im vorliegenden Beispiel die Aufforderung 65 den Befehl, den Codec auf den Payload Type 8 zurückzuschalten, der einem Codec nach G.711 entspricht.

Der in der Aufforderung 65 enthaltene Modify-Befehl wird vom MG 4 auf der B-Seite nach seiner Ausführung mit einer Bestätigung 66 beantwortet, wobei die Bestätigung 66 in der mit "Local" bezeichneten Beschreibungseinheit Informationen gemäß SDP enthält, die die Übermittlungsdaten der B-Seite, nämlich die vom MG 4 vergebene IP-Adresse 7, und den Port des MG 4 auf der B-Seite enthält.

Im weiteren Verlauf sendet der MGC 11 auf der B-Seite die transparente Mitteilung 17 im Rahmen des BICC-Protokolls nach Q.763/Q.765.5 an den MGC 10 auf der A-Seite.

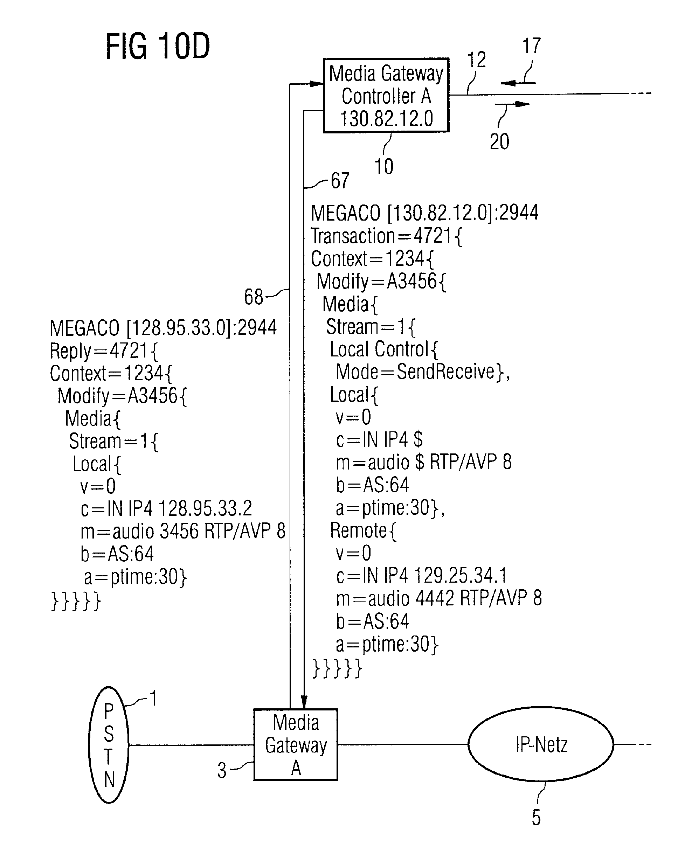

Anschließend sendet der MGC 10 auf der A-Seite gemäß Figur 10d eine Aufforderung 67 an das MG 3 auf der A-Seite, um das MG 3 auf der A-Seite zu veranlassen, auf eine Sprachübermittlung über das IP-Netz 5 zurückzuschalten. Dabei wird das MG 3 auf denselben Codec wie das MG 4 zurückgeschalten. Unter der Beschreibungseinheit "Remote" enthält die Aufforderung 67 die Übermittlungsdaten der B-Seite, insbesondere die vom MG 4 vergebene IP-Adresse 7, sowie den vom MG 4 auf der B-Seite verwendeten Port.

Auf die Aufforderung 67 hin schaltet das MG 3 auf der A-Seite in eine Sprachübermittlung über das IP-Netz 5 zurück. Außerdem sendet das MG 3 auf der A-Seite eine Bestätigung 68 an das MGC 10 auf der A-Seite, wobei die Bestätigung 68 in der Beschreibungseinheit "Local" die neuen Übermittlungsdaten der A-Seite enthält.

Der MGC 10 auf der A-Seite sendet die Übermittlungsdaten der A-Seite in der transparenten Mitteilung 20 nach Q.763/Q.765.5 an den Media Gateway Controller 11 auf der B-Seite zusammen mit der Information, daß der Codec auf der A-Seite erfolgreich auf die Sprachübermittlung über das IP-Netz 5 zurückgeschaltet worden ist.

Daraufhin sendet das MGC 11 auf der B-Seite eine Aufforderung 69 an das MG 4 auf der B-Seite und veranlaßt dieses dadurch, die Verbindung endgültig mit dem MG 3 auf der A-Seite herzustellen. Zu diesem Zweck enthält die Aufforderung 69 unter der Beschreibungseinheit "Remote" die Übermittlungsdaten der A-Seite.

Das Einrichten der Verbindung wird schließlich durch eine an den MGC 11 auf der B-Seite abgesandte Bestätigung quittiert.

Zusammenfassend lasst sich festhalten, daß hier ein Verfahren Verfahren zum Zurückschalten einer Faxübermittlung über ein Paketnetz in eine über das Paketnetz eingerichtete Sprachübermittlung mit den folgenden Verfahrensschritten beschrieben worden ist, das folgende Verfahrensschritte aufweist:
- Erfassen des Endes einer über ein Paketnetz eingerichteten Faxübermittlung zwischen einer Leitungsnetz und Paketnetz verbindenden ersten Übermittlungsstelle und einer Leitungsnetz und Paketnetz verbindenden zweiten Übermittlungsstelle;
- Zurückschalten der zweiten Übermittlungsstelle auf eine Sprachübermittlung unter Verwendung von in der zweiten Übermittlungsstelle gespeicherten Übermittlungsdaten einer der Faxübermittlung vorhergehenden Sprachübermittlung;
- Mitteilung des Endes der Faxübermittlung und der gespeicherten Übermittlungsdaten der Sprachübermittlung an die erste Übermittlungsstelle mittels eines die erste Übermittlungsstelle und die zweite Übermittlungsstelle verbindenden Signalisierungsnetzes; und
- Zurückschalten der ersten Übermittlungsstelle.

Bei diesem Verfahren wird von der zweiten Übermittlungsstelle die Rückschaltung in eine Sprachübermittlung eingeleitet. Die zweite Übermittlungsstelle verwendet dabei die von der vorhergehenden Sprachübermittlung gespeicherten Übermittlungsdaten, die über das Signalisierungsnetz der ersten Übermittlungsstelle mitgeteilt werden, so daß sowohl die erste als auch die zweite Übermittlungsstelle in die Sprachübermittlung zurückschalten können. Bei diesem Verfahren ist es daher nicht notwendig, die Faxübermittlung endgültig zu beenden und eine neue Sprachübermittlung über das Paketnetz aufzubauen.

Bei den hier beschriebenen Verfahren weisen die erste und die zweite Übermittlungsstelle jeweils MGs 3 und 4 sowie MGCs 10 und 11 auf, die untereinander mit Hilfe des MGCP nach RFC2705 oder dem Megaco-Protokoll kommunizieren. Die Kommunikation zwischen den Media Gateway Controllern erfolgt im Rahmen des BICC(Bearer Independent Call Control)-Protokolls über einen erweiterten APP gemäß Q.763/Q.765.5.

Diese Ausführungsformen des Verfahrens bieten den Vorteil, daß vorhandene Media Gateways und Media Gateway Controller verwendet werden können und daß die vorhandenen standardisierten Protokolle nur geringfügig geändert werden müssen. Das Verfahren läßt sich jedoch analog auch in dem MGCP oder Megaco-Standard entsprechenden Protokollen implementieren.

Abschließend sei darauf hingewiesen, daß Begriffe, wie Übermittlungsstelle, Konverter, Konvertersteuerung, Media Gateway und Media Gateway Controller funktional zu verstehen sind. Diese logischen Einheiten müssen nicht notwendig physikalische Einheiten bilden, sondern können auch in einer physikalischen Einheit in der Form von Software realisiert oder auch über mehrere physikalische Einheiten verteilt sein.

## Patentansprüche

1. Verfahren zum Umschalten zwischen einer über ein Paketnetz (5) eingerichteten ersten Übermittlung und einer über ein Paketnetz (5) eingerichteten zweiten Übermittlung mit den Verfahrensschritten:
- Einrichten einer ersten Übermittlung zwischen einer Leitungsnetz (1, 2) und Paketnetz (5) verbindenden ersten Übermittlungstelle (3, 10) und einer Paketnetz (5) und Leitungsnetz (1, 2) verbindenden zweiten Übermittlungstelle (4, 11); und
- Umschalten von der ersten Übermittlung zu einer zwischen der ersten Übermittlungsstelle (3, 10) und der zweiten Übermittlungsstelle (4, 11) eingerichteten zweiten Übermittlung und Speichern der Übermittlungsdaten der ersten Übermittlung während der zweiten Übermittlung in wenigstens einer der beiden Übermittlungsstellen (3, 10; 4, 11).

2. Verfahren nach Anspruch 1,
bei dem die Übermittlungsdaten wenigstens teilweise ausschließlich in einer der beiden Übermittlungsstellen (3, 10; 4, 11) gespeichert werden.

3. Verfahren nach Anspruch 1 oder 2,
bei dem nach dem Ende der zweiten Übermittlung in die erste Übermittlung zurückgeschaltet wird.

4. Verfahren nach Anspruch 2 und 3,
bei dem die in einer der beiden Übermittlungsstellen (3, 10; 4, 11) gespeicherten Übermittlungsdaten der anderen Übermittlungstelle (3, 10; 4, 11) zum Zurückschalten in die erste Übermittlung mitgeteilt werden.

5. Verfahren nach Anspruch 4,
bei dem die die Übermittlungsdaten speichernde Übermittlungsstelle (3, 10; 4, 11) die andere Übermittlungsstelle (3, 10; 4, 11) zum Zurückschalten auf die erste Übermittlung auffordert.

6. Verfahren nach einem der Ansprüche 1 bis 5,
bei dem für die erste Übermittlungsstelle (3, 10) und die zweite Übermittlungsstelle (4, 11) eine Übermittlungsstelle mit jeweils einem Paketnetz (5) und Leitungsnetz (1, 2) verbindenden ersten Konverter (3) und zweiten Konverter (4) verwendet wird, dem jeweils eine erste Konvertersteuerung (10) und eine zweite Konvertersteuerung (11) zugeordnet ist.

7. Verfahren nach Anspruch 3 und 6,
bei dem das Ende der zweiten Übermittlung der zweiten Konvertersteuerung (11) mitgeteilt wird.

8. Verfahren nach Anspruch 7,
bei dem das Ende der Faxübermittlung mit Hilfe einer Nachricht (13) mitgeteilt wird, die einen das Ende der Faxübermittlung anzeigenden Parameter enthält.

9. Verfahren nach Anspruch 5 und 6,
bei dem die zweite Konvertersteuerung (11) den zweiten Konverter (4) zum Zurückschalten auf die erste Übermittlung auffordert.

10. Verfahren nach Ansprüche 5 und 6,
bei dem die zweite Konvertersteuerung (11) über ein Signalisierungsnetz (12) der ersten Konvertersteuerung (10) das Ende der zweiten Übermittlung und die Übermittlungsdaten des zweiten Konverters (4) mitteilt.

11. Verfahren nach Anspruch 10,
bei dem die Mitteilung (17) der Übermittlungsdaten von der zweiten Konvertersteuerung (11) zur ersten Konvertersteuerung (10) einen Parameter (26) umfaßt, der neben den Übermittlungsdaten die Aufforderung zum Umschalten in der Form einer Auflistung von Informationselementen (24, 25, 26, 27) enthält.

12. Verfahren nach Anspruch 10 oder 11,
bei dem die erste Konvertersteuerung (10) den ersten Konverter (3) zum Zurückschalten der Faxübermittlung auf die Sprachübermittlung auffordert.

13. Verfahren nach Anspruch 5 und 6,
bei dem die erste Konvertersteuerung (10) der zweiten Konvertersteuerung (11) Übermittlungsdaten des ersten Konverters (3) mitteilt.

14. Verfahren nach Anspruch 13,
bei dem die Mitteilung (20) der Übermittlungsdaten von der ersten Konvertersteuerung (10) zur zweiten Konvertersteuerung (11) einen Parameter enthält, der die Übermittlungsdaten die in der Form einer Auflistung von Informationselementen (47, 48, 49) enthält.

15. Vorrichtung zur Konversion von Informationsströmen zwischen einem Paketnetz (5) und einem Leitungsnetz (1, 2), die zur Ausführung eines Verfahrens nach einem der Ansprüche 1 bis 14 eingerichtet ist.

16. Vorrichtung nach Anspruch 15,
die einen an das Paketnetz (5) und an das Leitungsnetz (1, 2) angeschlossenen Konverter (3, 4) und eine an ein Signalisierungsnetz (12) angeschlossene Konvertersteuerung (10, 11) aufweist.

17. Computerprogrammprodukt zum Betrieb einer Übermittlungsstelle (3, 4, 10, 11) zwischen einem Paketnetz und einem Leitungsnetz, das Programmcode zur Ausführung eines Verfahrens nach einem der Ansprüche 1 bis 14 enthält.
